(19) Europäisches Patentamt
European Patent Office
Office européen des brevets

(11) **EP 2 214 154 A2**

(12) **EUROPEAN PATENT APPLICATION**

(43) Date of publication:
**04.08.2010 Bulletin 2010/31**

(51) Int Cl.:
*G09G 3/34* (2006.01)   *G06T 5/40* (2006.01)

(21) Application number: **09252691.2**

(22) Date of filing: **27.11.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **30.01.2009 JP 2009019442**

(71) Applicant: **Hitachi Consumer Electronics Co. Ltd. Tokyo 100-0004 (JP)**

(72) Inventors:
• **Ogi, Yuya**
  **Tokyo 100-8220 (JP)**
• **Tsuru, Yasutaka**
  **Tokyo 100-8220 (JP)**
• **Tanaka, Kazuhiko**
  **Tokyo 100-8220 (JP)**

(74) Representative: **Hackney, Nigel John et al**
  **Mewburn Ellis LLP**
  **33 Gutter Lane**
  **London**
  **EC2V 8AS (GB)**

(54) **A video display apparatus**

(57) For the purpose of obtaining a video signal by suppressing a black float while not consuming an excess electric power therein, not contributing to display of a backlight, a video display apparatus having a plural number of backlights for irradiating lights upon a display panel, comprises a histogram detector for conducting a histogram detection for each display region corresponding to that backlight from an input video signal of one (1) frame, a means for determining a control value of that plural number of backlights depending on a specific picture or video, which is detected by the histogram detector, and a video signal processor for controlling an amount of a controlled light the display panel of a display region, i.e., a put-out region, depending on the backlight control value, which is determined by the means for determining the control value of the backlight.

FIG. 2

EP 2 214 154 A2

**Description**

The present invention relates to a video display apparatus for conducting display of video by modulating a backlight depending onavideosignal, and in particular, relates to a lighting apparatus for controlling the backlight of a region corresponding to the video signal, and a video display apparatus equipped with this, as well as, a video display method.

The display apparatus can be classified into, roughly, a display of light emission type, such as, a CRT (Cathode Ray Tube) or a plasma display panel, etc. , and a display apparatus of non-light emission type, such as, a liquid crystal display (also, it may be called a "liquid crystal display apparatus" or "a liquid crystal display panel"), etc.

As the display apparatus of non-light emission type are already known that of applying a light modulator element of reflection type therein, for adjusting an amount of reflection lights depending on the video signal, and that of applying a light modulator element of transmission type therein, for adjusting an amount of transmitted lights depending on the video signal. In particular, the liquid crystal display apparatus comprising a lighting apparatus (also, it may be called "a backlight") on a back surface thereof, with applying the liquid crystal display panel as the transmission type light modulator element, because of thin thickness and light weight thereof, it is adopted in various kinds of display apparatuses, such as, a monitor of a computer, a television, etc., for example.

By the way, with such the display apparatus of self-light emission type, such as the CRT or the like, for example, light emission is made, selectively, at specific pixels, with a necessary light amount thereof, depending on the video signal, when displaying a video or picture thereon. For this reason, when displaying a black color or a dark picture thereon, the light emission of the pixels are stopped, i.e., since the amount of light emission can be made small, therefore electric power consumption comes to be small.

On the contrary to this, in general, with the display apparatus of non-light emission type, such as, the liquid crystal display apparatus, for example, the backlight always emits the light at a constant brightness, irrespective of the video signal. Accordingly, the brightness is set to fit the condition where a brightness (or may be called "luminance") of the screen comes to the maximum, normally, and since the light emission is made with the same brightness even when displaying the black color and the dark picture on the screen, then unnecessary consumption is made on electric power, which does not contribute to the display. Further, when displaying the black color thereon, the display does not get to be dark, sufficiently, because of leakage of a part of lights of the backlight, then a contrast within a dark room comes to be small comparing to that of the self-light emission type display apparatus, such as, the CRT, etc.

Then, within the liquid crystal display apparatus, various kinds of development are made, i.e., a video display region is divided into a plural number of regions, and the luminance of the backlight is controlled for each region corresponding to the video signal, by a unit of the divided regions, and thereby achieving the energy saving, while keeping a contrast ratio to be high.

However, when determining a control value of the backlight depending on the video signal for each region, in particular, if there is inputted a video having a while picture and a black picture within the same region, since the backlight control value for that region is such that it lights up at the maximum luminance; therefore, a black float is generated, unnaturally, in a part of the black picture. In particular, in case when the region where the backlight lights up at the maximum luminance, and the region where it does not light up are neighboring with each other, since the contrast of the liquid crystal panel is not infinity, then it has a drawback that the unnatural black float can be visibly recognized, remarkably.

For such the problem as was mentioned above, conventionally, there is proposed a liquid crystal display apparatus, for suppressing the black float by controlling the brightness of the backlight. Conventionally, as a technology of this kind is already known what is described in the following Patent Document 1, for example. Within the liquid crystal display apparatus described in the Patent Document 1, as is shown in Fig. 12B, for a neighboring region (see Fig. 12C) having a constant width in a put-out region neighboring to the divided region, which is lighted or turned on upon basis of the video signal, a backlight is turned on with a luminance smaller than that of the divided regions turned on, and thereby suppressing the black float to be recognized visually.

[Patent Document 1] Japanese Patent Laying-Open No. 2008-51905 (2008)

However, the conventional liquid crystal display apparatus mentioned above has the following problems.

Because of such light emission of the backlight onto the neighboring region of the constant width in the put-out region neighboring the divided region, which is turn on upon basis of the video signal, so as to rise up such a luminance that the difference of luminance between the turn-on region cannot be visually recognized, an unnecessary electric power is consumed therein, which does not contribute to the display. Also, there is no description about the light leakage from the turn-on region to the put-out region, i.e. , no consideration is paid on it during the control thereof.

The present invention is accomplished by taking the problem mentioned above into the consideration thereof. And, according to the present invention, an object thereof is to provide a technology for enabling to suppress the black float while reducing the unnecessary electric power of the backlight.

The video display apparatus, according to the present invention, as is described in the pending claims attached, is **characterized in that** a luminance of the backlight of the region, in which an amount of leakage lights leaking from a turn-on region is equal or greater than a predetermined value, is put out, and also a light control value of the display panel is controlled, thereby suppressing the black float. When applying a transmission-type display panel, such as, a liquid crystal display panel therein, as the display panel, control is made upon a transmission factor thereof, as an amount of the controlled light.

Preferably, according to the present invention, an analysis is made upon an input video signal, so as to detect a specific picture or video, necessity to be controlled on the black float, depending on the characteristics thereof, and also obtains the position information of the turn-on region. By taking the leakage lights from the turn-on region and a distance from that turn-on region into the consideration thereof, it is possible to control the transmission factor of the display panel, in a put-out region (i.e., a correction region) thereof, neighboring with or lying within a certain distance therefrom, upon basis of the positional relation ship between the turn-onregion, thereby reducing the black float, and an unnecessary electric power for the backlight can be suppressed down to the minimum.

With such structures as was mentioned, in a lightening apparatus, for controlling the luminance of the backlight of the regions corresponding to a video signal, while dividing the video display region into a plural number of regions, and a video display apparatus comprising the same therein, it is possible to control the amount of the controlled light of the display panel corresponding to the put-out regions, and thereby obtaining a video, being large in an effect of saving the electric power consumption, and suppressing the black float thereon.

Preferably, according to the present invention, achieving a large effect of saving the electric power, it is possible to obtain a screen suppressing the black float.

## BRIEF DESCRIPTION OF THE SEVERAL VIEWS OF THE DRAWING

Those and other objects, features and advantages of the present invention will become more readily apparent from the following detailed description when taken in conjunction with the accompanying drawings wherein:

Figs. 1A to 1E are views for showing characteristics of a liquid crystal display apparatus, according to a first embodiment of the present invention;

Fig. 2 is a block diagram for showing the entire of the liquid crystal display apparatus, according to the first embodiment of the present invention;

Fig. 3 is a block diagram for explaining the operation of a video signal processor portion shown in Fig. 2;

Figs. 4A to 4C are views for showing detection of a specific video by means of histograms;

Fig. 5 is a block diagram for showing the operations of a video signal corrector portion shown in Fig. 2;

Figs. 6A to 6C are views for considering ill influences of lights leaking from the neighboring regions;

Figs. 7A and 7B are views for showing contribution ratios of light distribution in specific regions;

Fig. 8 shows tables of operations of a memory region portion shown in Fig. 5;

Figs. 9A to 9C are views for showing control filters, according to a second embodiment of the present invention;

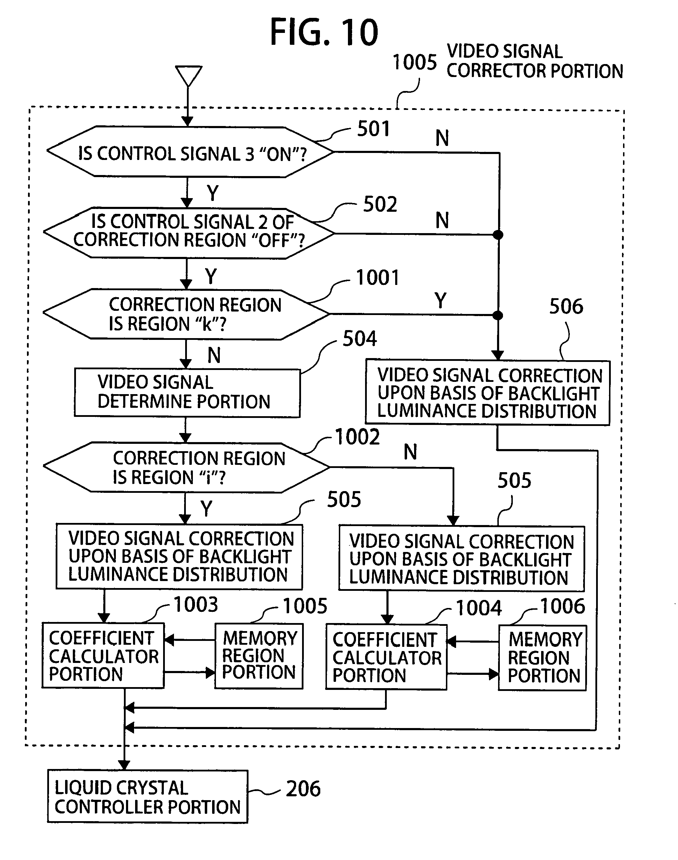

Fig. 10 is a block diagram for explaining the operations of a video signal corrector portion, according to the second embodiment of the present invention;

Fig. 11 is a block diagram for showing the entire of the liquid crystal display apparatus, according to a third embodiment of the present invention; and

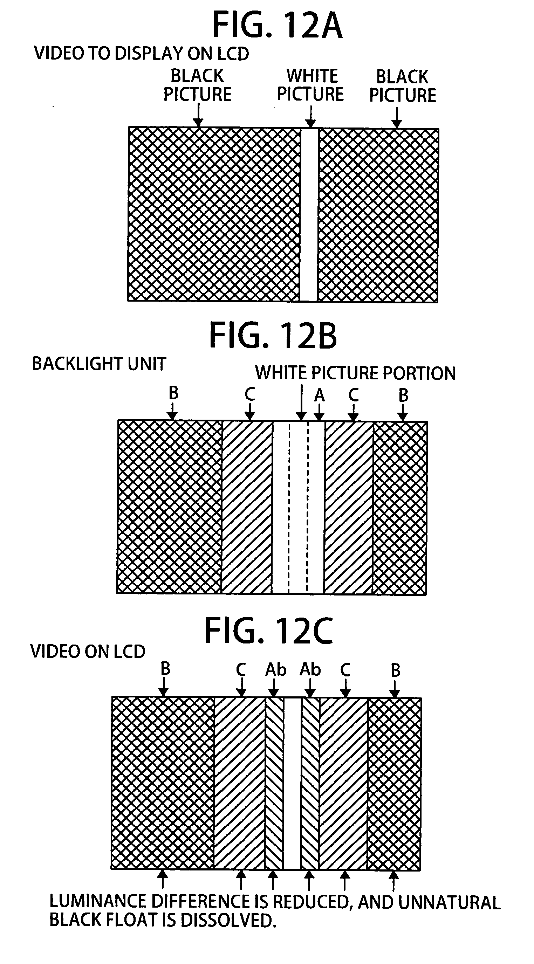

Figs. 12A to 12C are views for showing an idea for controlling the black float, according to the conventional art.

## DETAILED DESCRIPTION OF THE PREFERRED EMBODIMENTS

Hereinafter, embodiments according to the present invention will be fully explained by referring to the attached drawings.

<Embodiment 1>

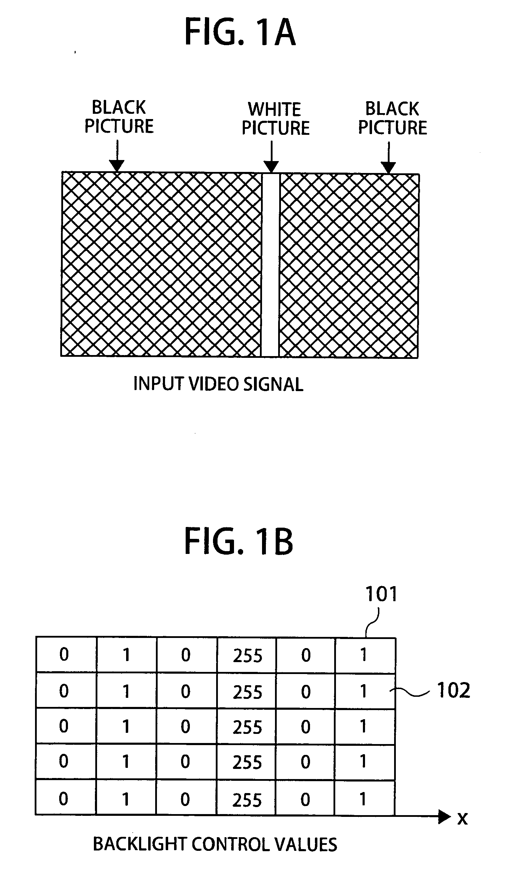

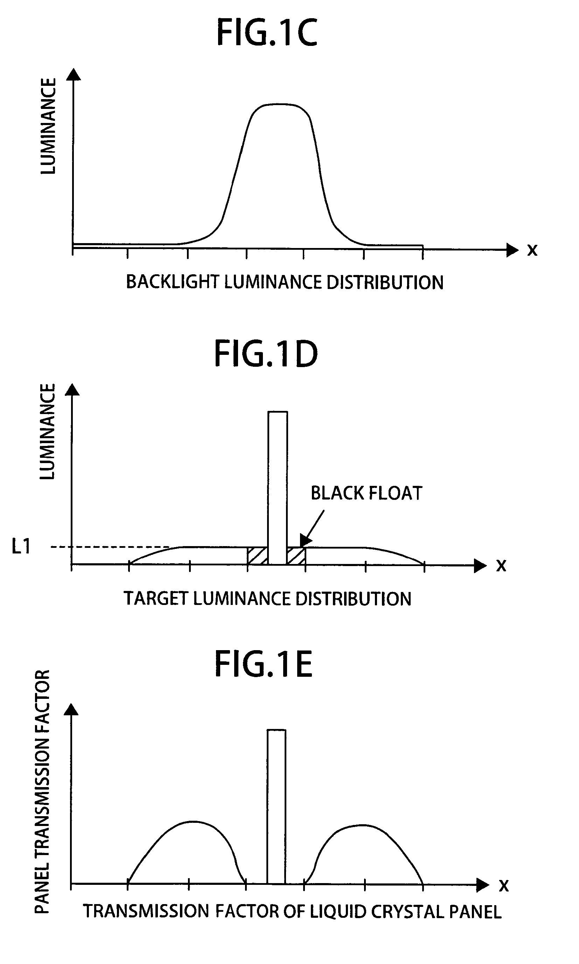

Figs. 1A to 1E show: (a) an input video signal, (b) a backlight control value when the input video signal is inputted, (c) a backlight luminance distribution, (d) a target luminance distribution, and (e) change of transmission ratio of a liquid crystal panel, of a liquid crystal display apparatus, according to a first embodiment (embodiment 1) of the present invention. As an example, the input video signal mentioned above is assumed to be constructed with a black picture region (for example, "0" by 8 bits expression) and a white picture region (255), and a region (102) of a backlight, which can be controlled independently, when dividing a display region (101) into a plural number of regions, is also assumed to be constructed with six (6) regions in the horizontal direction and five (5) regions in the vertical direction, i.e., 30 regions in total thereof. In each region is/are provided one (1) or a plural number of light source(s), such as, a light emitting diode (s), etc., for example, an amount of lights (i.e., the luminance) of which can be controlled, independently. Thus, controlling the light source corresponding to this each region enables to control the luminance of the backlight of each region. This each region may sometimes be called "a backlight region", hereinafter.

The backlight control value mentioned above corresponds to the input video signal mentioned above, wherein the backlight control value corresponding to a region, into which a while picture is inputted (also, it may be called "a turn-on region"), is determined to be a control value (for example, "255" by 8 bits expression) of bringing that region up to the maximum luminance thereof, and a backlight control value of the region, neighboring with that turn-on region, and the region where an amount of leakage lights from the turn-on region is equal to or greater than a predetermined value, is determined to be "0" . The backlight control value corresponding to the region, into which the black picture is inputted, where the leakage light amount from the turn-on region is equal to or lower than the predetermined value, because of being apart from the turn-on region at a predetermined distance, is controlled so that it emits lights at a value ("1" by the 8 bits), being sufficiently small comparing to the region, into which the white picture is inputted, within a limit where the target luminance distribution mentioned above can be presented by changing the transmission factor of the liquid crystal panel.

Within the general configuration of the liquid crystal display apparatus, between the backlight portion and the liquid crystal panel is inserted several pieces optical sheets or the like, such as, diffuser panels, etc., and the emission lights from the turn-on regions are distributed, largely, comparing to the display region of the liquid crystal panel corresponding to those regions. Therefore, in the put-out region neighboring with the turn-on region is generated the leakage of lights; i.e., an intrusion of lights from the turn-on region. Herein, an amount of the leakage lights indicates a quantity of lights leaking from the turn-on region into the put-out region, and a value, which can be defined by a front surface luminance, etc.

In this instance, it is preferable that, within the put-out region, the predetermined value of the amount of the leakage lights from that turn-on region has the luminance, which is equal to or greater than 1% of the maximum luminance of the turn-on region.

The target luminance distribution mentioned above is so determined that, within a predetermined distance from the turn-on region mentioned above, the luminance has a value, being equal to that of the black float or unrecognizable of the difference of luminance, and after the predetermined distance, the luminance mentioned above directs to "0", gradually.

Thus, with correction of the video signals, as indicated by the change of the transmission factor of the liquid crystal panel, so as to obtain the target luminance distribution, upon receipt of the backlight control value, it is possible to obtain the picture, being high on an effect of saving of electric power, but without visibly recognizing the black float.

Hereinafter, explanation will be given on an embodiment of the present invention, by referring to the drawings attached herewith.

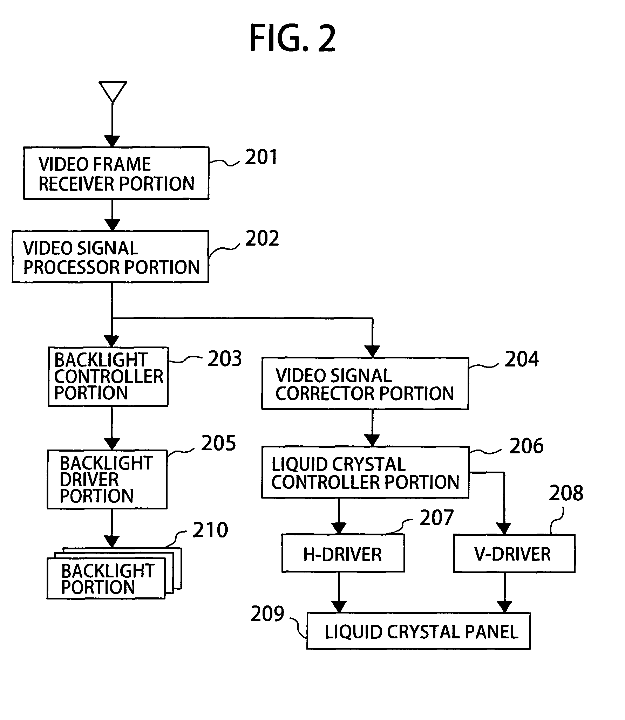

Fig. 2 is a block diagram for showing the entire of circuits, within a liquid crystal display apparatus, according to a first embodiment of the present invention.

The liquid crystal display apparatus of this embodiment comprises a video frame receiver portion (201), a video signal processor portion (202), a backlight controller portion (203), a video signal corrector portion (204), a backlight driver portion (205), a liquid crystal controller portion (206), a H-driver (207), a V-driver (208), a liquid crystal panel (209) and a backlight portion (210).

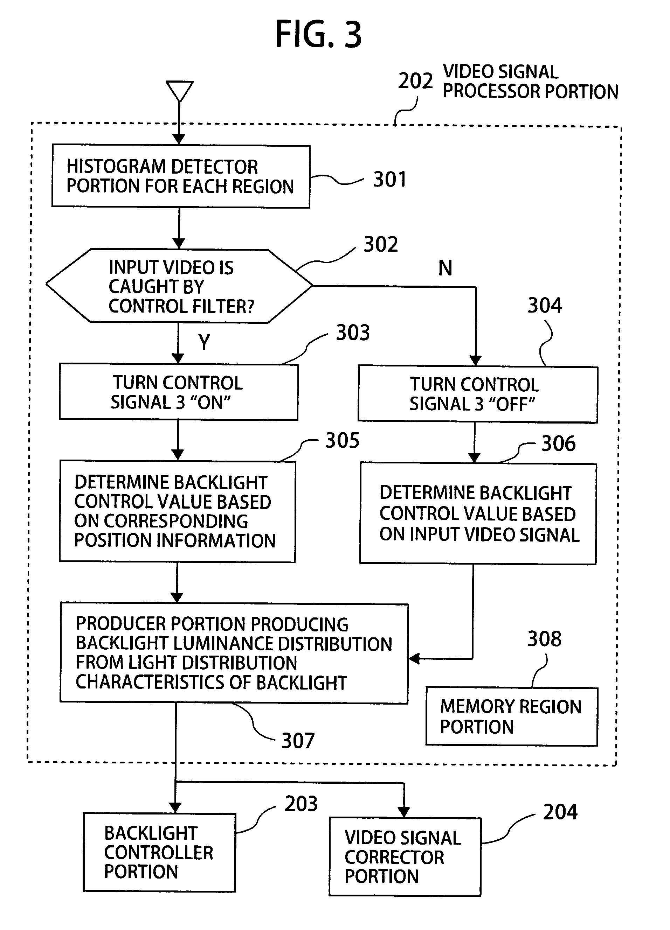

Fig. 3 is a block diagram for explaining the operations of the video signal processor portion mentioned above.

A video frame, which is received by the video frame receiver portion, is transmitted to the video signal processor portion. On the video frame mentioned above, which is inputted into that video signal processor portion, histogram detection is conducted for each plural numbers of the backlight regions, which can be controlled, independently, by a histogram detector portion (301) for each region. In this histogram detection, a gradation value of each pixel of the video frame, which is included in that backlight region is counted, and in case where the gradation values, being equal to or less than a predetermined upper limit gradation value (P1), and the gradation values, being equal to or greater than a predetermined lower limit gradation value (P2), occupy 90% or more of the number of pixels corresponding to that backlight region, the control signal 1 is turned "ON". Also, with the gradation values included in that backlight region, in case where the gradation values equal or less than P1 and the gradation values equal or greater than P2 occupy 90% or more of the number of pixels corresponding to that backlight region, and also there is included a gradation value(s) equal or greater than P2, then the control signal 2 is turned "ON",

For example, "P1" is determined to be "20", i.e., a value from 0% to 10% of the maximum gradation value ("255" if 8 bits), and "P2" to be "220", i.e., a value from 85% to 100% of the maximum gradation value.

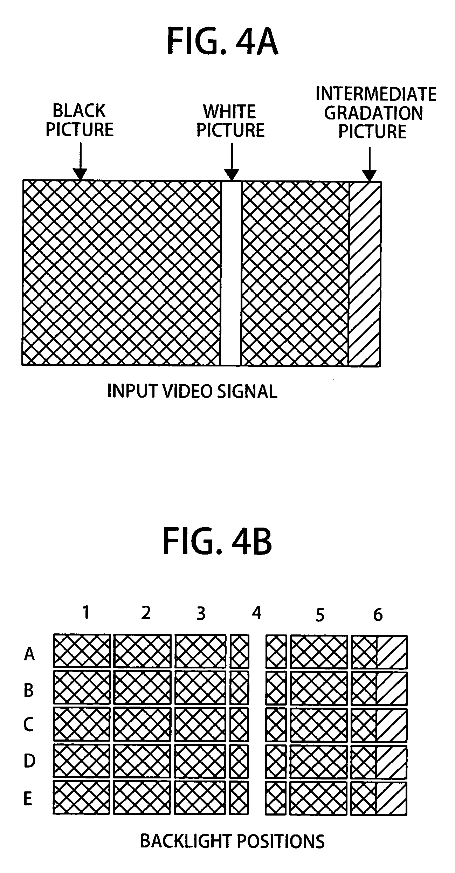

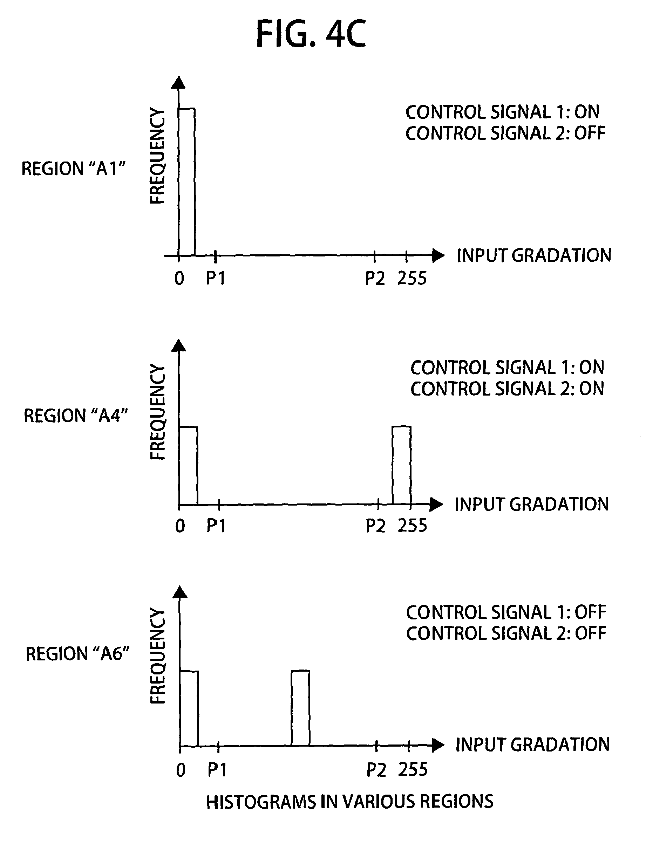

Explaining this by referring to an example shown in Figs. 4A to 4C, in particular, in case where the input video signal (Fig. 4A) and the backlight position (Fig. 4B) are in a relationship shown in those figures, the histogram in the region "A1" of only black picture includes only the gradation value therein, being equal or less than "P1", but does not include the gradation value, being equal or greater than "P2", therefore the control signal 1 is turned "ON" while the control signal 2 is turned "OFF". A region "A4" including the white picture therein includes only the gradation value equal or less than "P1" and the gradation value equal or grater than "P2", and further it includes the gradation value equal or greater than "P2", then the control signal 1 is turned "ON" and also the control signal 2 is turned "ON". On the contrary to this, a region "A6", a half of the number of pixels of the region including an intermediate gradation picture therein, does not fit to the condition that the gradation value equal or less than "P1" and the gradation value equal or greater than "P2" occupy 90% or more of the number of pixels corresponding to the backlight region, then the control signal 1 is turned "OFF" and the control signal 2 is turned "OFF".

Through detection of the histogram mentioned above, it is possible to identify the video frame, on which the black float easily generates. In this histogram detection, if a counter for detecting the intermediate gradation value for each region mentioned above within that video frame counts up to 10% or more of the pixels of that region, then both the control signals 1 and 2 are turned "OFF", the intermediate gradation value not being counted up to 10% or more of the pixels of that region, and the control signal 2 of that region is turned "ON" if the gradation value equal or greater than "P2" is detected upon only one (1) pixel; therefore, there can be achieved an advantage that the count value of the gradation values is small on the histogram, and that a circuit scale of a hardware does not come to be large, too much.

After completing the histogram detection for all of the backlight regions mentioned above, within the control filter(303) is determined a control method for the video frame mentioned above.

Only in case where the control signal 1 of all the backlight regions is "ON", a control signal 3 is turned "ON" (303), and the control value of the backlight region is determined upon basis of position information of the region where the control signal 2 is "ON".

Hereinafter, a method will be mentioned for determining the backlight control value when the control signal 3 is "ON".

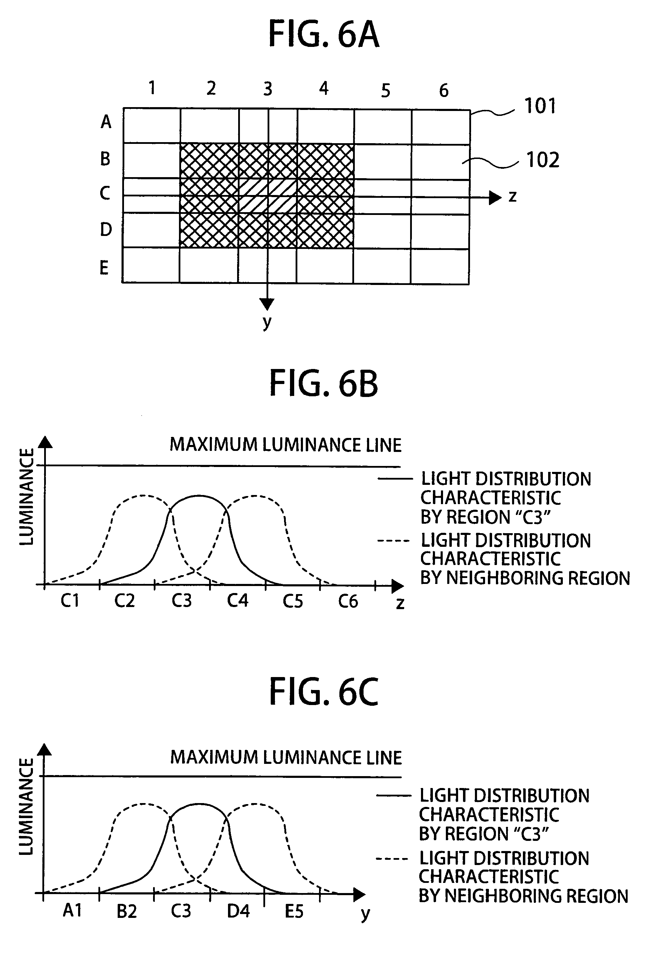

Figs. 6A to 6C are views for showing an expansion of lights, when considering the region "C3", mainly. Distributions of the luminance when determining the transmission factor of the liquid crystal panel at the maximum, in case where only the region "C3" emits the lights, are shown on an x-axis direction and a y-axis direction, respectively, wherein the distribution of luminance of the region "C3" is depicted by a solid line, and the light emission in the neighboring region is depicted by a broken line. As is shown in the figure, the light emission of the region "C3" gives an ill influence upon the neighboring region, and the region "C3" receives the ill influence of the leakage lights from the neighboring region. In particular, when a video signal is inputted for setting up the region "C3" at the maximum luminance, the region "C3" and the neighboring region giving the ill influence upon the region "C3" must emit the lights at the maximum luminance. Normally, in this manner, the backlight regions neighboring with each other are related, mutually, and from this mutual relationship is determined the backlight control value, and the distribution of luminance is produced. When producing the distribution of luminance, it is already well-known that a failure of picture will occur, or that a high-definition picture having a high fidelity to the original picture if no consideration is paid upon the leakage light leaking from the neighboring region.

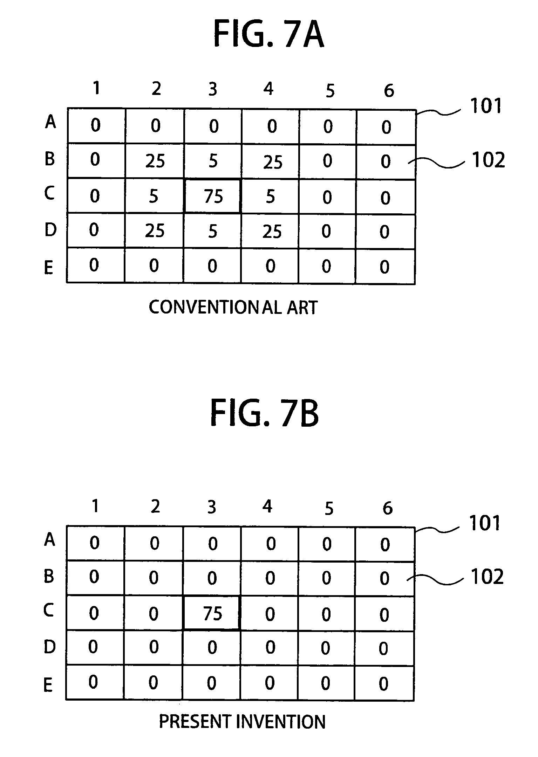

Figs. 7A and 7B show contribution ratios of light distribution of the region "C3", to each of the regions. As is shown in Fig. 7A, the ratio of the light emission, which is given to the region "C3" by the region "C3" itself, is 75%, and remaining 25% thereof is interpolated with the lights leaking from the neighboring regions. Thus, when the light emission of only the region "C3" is insufficient in the luminance thereof, then the insufficient luminance is interpolated, for example, with multiplying the backlight control values of the neighboring regions by a certain value.

However, when interpolating the luminance by turning on the put-out regions neighboring with the turn-on region, much of unnecessary electric power is consumed, not contributing to the display.

Then, according to the present embodiment, for the video frame, the control signal 3 of which is turned "ON", a contribution ratio is determined to be "0", i.e., a ratio of contributing to the turn-on region by the light emission of the neighboring regions thereof, as is shown in Fig. 7B, and thereby letting the regions, the control signals 2 of which are "ON", to emit the lights at the maximum luminance. With the backlight control values of the regions, the control signals 2 of which are "OFF", the backlight control values of the regions, neighboring with the turn-on region, and the regions, where an amount of the leakage lights is equal to or greater than a predetermined value, are set to "0". With the backlight control values of the regions, the control signals 2 of which are "OFF", being within a predetermined distance from the turn-on region and where an amount of the leakage lights is equal or less than the predetermined value, the backlight control value is so determined that it causes the region, the control signal 2 of which is "ON", to emit the lights at a sufficiently small value ("1" by 8 bits), within a limit that the target luminance distribution can present by changing the transmission factor of the liquid crystal panel.

However, means for calculating out the amount of leakage light mentioned above, while memorizing an amounts of leakage lights when a single region is turned on, into a memory region portion (308) or the like, in advance, determines a value by summing up all of the amounts of leakage lights from the turn-on regions, corresponding to the position information from the turn-on region to a specific pixel. The means for calculating out the amount of leakage light mentioned above may be installed within a control value determining means of the backlight, or may be achieved in the form of an external microprocessor or hardware. Also, the amount of leakage lights is calculated out and memorized into the memorizing region, such as, a ROM, representatively, for example, when a specific turn-on region is lighted, and it may refers to as a LUT (LOOK UP TABLE).

In this manner, with determining the control value of the backlight, the display luminance of the video frame having the gradation equal or greater than the predetermined lower limit gradation value (P2) is lowered down; however, it is possible to suppress the light emission, which does not contribute to the display, and thereby to increase an effect of reducing the electric power, while suppressing the black float. Also, since the luminance distribution is produced after determining the backlight control value, the failure of picture or the like will not occur.

In case where the region, the control signal of which is "OFF", of the backlight region is included in the video frame, the control signal 3 is turned "OFF" (304), and the control value of the backlight region is determined upon basis of the input video signal (306).

After determining the control value of the backlight region mentioned above, within a backlight luminance distribution producer portion (307) is produced the backlight luminance distribution corresponding to that control value, and the control value of the backlight region is transmitted to the backlight controller portion (203) and the produced backlight luminance distribution is transmitted to the video signal corrector portion (204).

The memory region portion (308) is constructed with a memory element, such as, a ROM or a RAM, etc., representatively, and it holds the characteristics of the lights of the backlight and the backlight control values for a several number of frames, etc., therein, and is assumed that it has done the determination of the backlight control values and memorization of the information necessary in the backlight luminance distribution producer portion mentioned above therein.

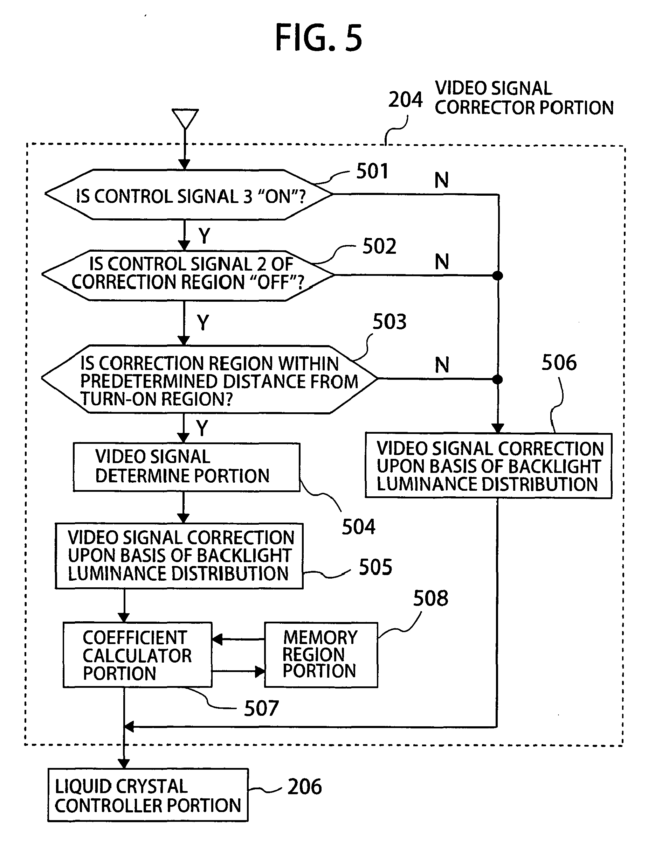

Next, explanation will be made on the video corrector means in the video signal corrector portion mentioned above, by referring to Fig. 5.

The video signal corrector portion mentioned above, being inputted with the video frame, the control signal 3, the backlight luminance distribution, and the control signal 2 of each region, from the videosignalprocessor portion mentioned above,determines on whether the control signal 3 is "ON" or "OFF" in a first determining portion 1 (501). When the control signal 3 is "ON", advancing into to a determining portion 2 (502), wherein it is determination on whether the control signal 2 of the correction region is "ON" or "OFF". When the control signal of that correction region is "OFF", advancing into a determining portion (503), wherein it is determined whether that correction regions lies within a predetermined distance or not, from the turn-on region. That determining portion 3, though it conducts the transmission factor control of the liquid crystal panel, so that the black float cannot be recognized thereon, in the region near to the turn-on region, but no control is done within the region sufficiently far from the turn-on region, and thereby having a roll of decreasing the luminance of that region. That predetermined distance has a value, which can be set up arbitrarily, and is indicative of a number of regions from the turn-on region up to the region where the target luminance distribution comes to "0", and in the case of Figs. 1A to 1E, it is three (3), for example.

In case where that correction region lies within the predetermined distance from the turn-on region, the video signal is determined within a video signal setup portion (504). The video signal to be set up within that video signal setup portion is given with the arbitrary value so as to be constant within the region, and the video signal correction is made upon basis of the backlight luminance distribution.

The video signal has the following relationship, assuming that the display luminance of the liquid crystal panel is D(u,v), the luminance distribution produced by the backlight luminance distribution producer portion mentioned above is BL(u,v), the video gradation value after the correction is P1(u,v) and a gamma characteristic of the liquid crystal panel is "γ", for a certain pixel (u,v):

$$D(u,v) = \gamma(P1(u,v)) \times BL(u,v)$$

The video gradation value P1(u,v) after the correction is as follows, for D(u,v) being a constant luminance value within the region, which is determined in the video signal setup portion mentioned above:

$$P1(u,v) = \gamma-1(D(u,v) \div BL(u,v))$$

The P (u, v) obtained from this relationship has such a value that the light emission of the backlight comes to be uniform when it permeates through the liquid crystal panel, and it is transmitted to a coefficient calculator portion (507). A coefficient value for each pixel, which is determined upon basis of the position relationship between the turn-on region, is read out from a memory region portion (508) to be calculated, and thereby determining a pixel gradation value P2 (u, v) to be transmitted to the liquid crystal controller portion mentioned above.

Hereinafter, mentioning is made on a method for reading out the coefficient value within the coefficient calculator portion mentioned above.

It is assumed that the position of that correction region is $(X_i,Y_i)$, the position of that turn-on region is $(X_j,Y_j)$, the difference in the x-direction between the turn-on region and the correction region s $(=X_i-X_j)$, and the difference in the y-direction between the turn-on region and the correction region $t(=Y_i-Y_j)$. Within the coefficient calculator portion, upon checking differences from all the turn-on regions, such position information is calculated out that a total value of absolute values of "s" and "t" comes to be minimal. In case if there are plural numbers of turn-on regions, having the same total value of the absolute values of "s" and "t", only the absolute value is memorized. Upon thispositioninformation between the turn-on region,a coefficient value k(u,v), which is memorized in the memory region portion mentioned above, is read out, and with the following calculation is determined a video signal:

$$P2(u,v) = P1(u,v) \times k(u,v)$$

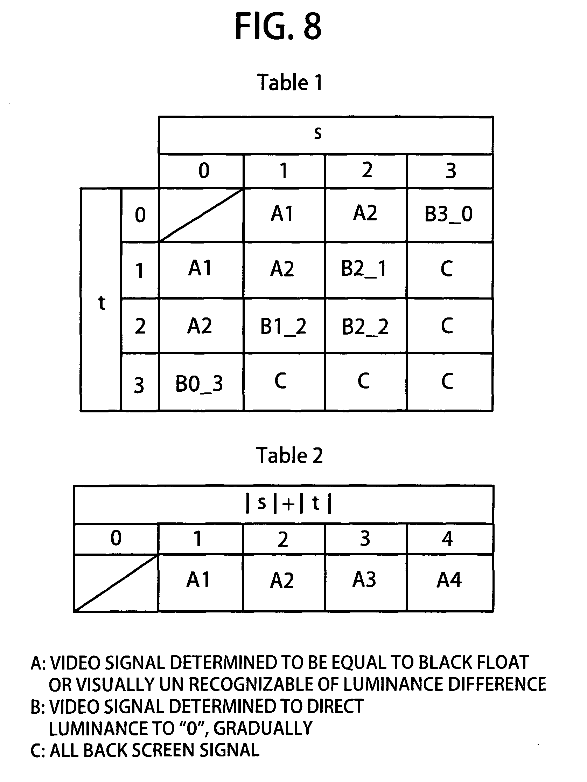

As an example, the coefficient values to be held by the memory region portion mentioned above are shown in Fig. 8. Every one of the coefficient values, which are held by that memory region portion, has a coefficient value corresponding to the light leakage from the neighboring region, and has a Table 1 memorizing therein a coefficient value (A), being so determined that the luminance penetrating through the liquid crystal panel comes to be equal to the black float, or that no difference of luminance can be recognized, or (B) the coefficient value determined to direct "0" of the luminance, gradually, or (C) an all black screen coefficient value, and a Table 2 memorizing therein the coefficient value if there are plural numbers of turn-on regions, having the same total value of the absolute values of "s" and "t".

In the example shown in Fig. 8, under the absolute value equal to or less than "2", the Table 1 determines the coefficient value (A), being equal to the black float or no difference of luminance can be recognized, and under the absolute value equal to or greater than "3", it determines the coefficient value (B) being determined to direct the luminance to "0" gradually or the all black screen coefficient value (C), to the correction region mentioned above.

For example, in case where s=1 and t=1, within the coefficient calculator portion mentioned above, a coefficient value of a number "A1", which is held by the memory region portion, is called up to be calculated, and thereby obtaining the video signal of the correction region. Also, in case where s=-2 and t=-1, a coefficient value of a number "B2-1", which is held by the memory region portion, is called up, and after being reversed up and down and left and right, it is calculated, and thereby obtaining the video signal of the correction region. In case if there are plural numbers of the turn-on regions, having the same total value of the absolute values of "s" and "t", a coefficient corresponding to the value of that absolute value is called up, to be calculated, and thereby determining the video signal of the correction region.

In the determine portions 1, 2 and 3 mentioned above, upon the video signal of the correction region, being disagree with the condition thereof, and the video signal of the correction region, which is produced in the video signal producer portion mentioned above, video signal correction is made (506), upon basis of the backlight luminance distribution, and they are transmitted to the liquid crystal controller portion (206).

In the liquid crystal controller portion, upon basis of an inputted video synch signal is produced a control signal, to be transmitted to the H-driver (207) and the V-driver (208). In the H-driver, upon basis of the video signal transmitted from the video signal corrector portion is produced a display signal, to be transmitted to the liquid crystal panel (209). In the V-driver is produced a scanning signal, to be transmitted to the liquid crystal panel. In the liquid crystal panel, upon driving of each scanning electrode and each data electrode, the corresponding pixel region is applied with gradation voltage corresponding to the display signal, and thereby controlling a response of the liquid crystal in that pixel region.

Also, the transmission method for transmitting the backlight control value of each region from the video signal processor portion to the backlight controller portion should not be limited to, in particular, but may be achieved by using a bus line for exclusive use thereof, using an interface in accordance with any one of various kinds of interface standard, or inserting the backlight control value into a blanking period of the video signal, etc., as far as a signal for designating that region and a signal for designating an intensity of light emission thereof are included therein. In the backlight controller portion mentioned above, the control signal corresponding to the intensity of light emission of each backlight portion (210) is transmitted to the backlight driver portion mentioned above. In that backlight driver portion, the signal for driving the backlight may be of PWM (Pulse Width Modulation) or amplitude modulation. In case of the PWM, a PWM frequency is constant, and a ratio between ON period and OFF period (i.e., a duty ratio) is changed depending on the intensity of light emission; thereby letting a LED driver for driving the LED to conduct the PWM control. Also, it is preferable that the PWM frequency is higher than a frame frequency of the liquid crystal display apparatus.

<Embodiment 2>

With a second embodiment of the present invention, for the purpose of maintaining the luminance distribution within a surface, not depending upon the position information with respect to the turn-on region, but for each region, the video signal is determined to be set to the correction region. The embodiment 2 differs from the embodiment 1, in particular, in the operation of the control filter (302), the method for determining the backlight control value when the control signal 3 is "ON", and the operation of the video signal corrector portion (205).

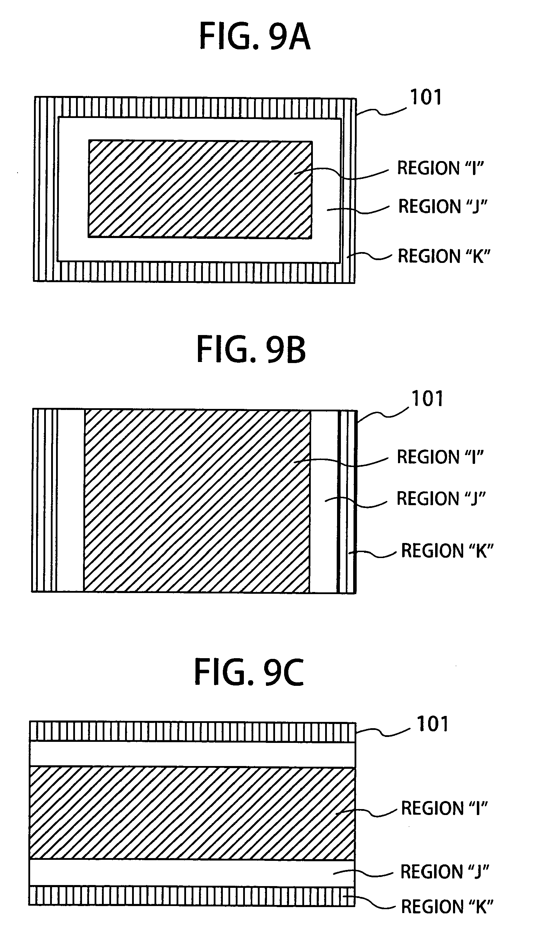

Figs. 9A to 9C are views for showing the second embodiment of the present invention, in particular, classifying the display region (101) into three (3) kinds of regions.

The control filter mentioned above receives the control signal 1 and the control signal 2 of each region, from the histogram detector portion (301) for each region, and it turns the control signal 3 "ON", when the control signals 1 for all regions are "ON" and also when the region, the control signal 2 of which is "ON", is included only within the region "I".

Regarding the backlight control values of the regions included in the region "I" and the region "J", the control signals 2 of which are "OFF", it is assumed that the backlight control value of the region neighboring to the turn-on region and the region where the amount of leakage lights leaking from the turn-on region is equal or greater than the predetermined value is "0". The backlight control value of the region, the control signal 2 of which is "OFF", apart from the turn-on region at the predetermined distance and equal or less than the predetermined value in the amount of the leakage lights leaking from the turn-on region, is determined, so that the backlight emits the lights at the value sufficiently small ("1" by 8 bits) comparing to that of the region, the control signal 2 of which is "ON", within a limit that the target luminance distribution can be expressed by changing the transmission factor of the liquid crystal panel. The backlight control value of the region, the control signal 2 of which is "OFF", is set to "0", and thereby putting out the lights.

Also, the correction regionmentioned above, included within the region "I", in the region, the control signal 2 of which is "OFF", is determined, by reading out the coefficient value, being determined to be equal to the black float or no luminance difference be visually recognizable thereon, from a memory region portion (1005), and calculating it within a coefficient calculator portion (1003). That correction region included within the region "J" is determined, by reading out the coefficient value, being determined to direct to "0" of the luminance gradually, from a memory region portion (1006), and calculating it within a coefficient calculator portion (1004). No video correction is done upon that correction region, which is included in the region "K" (1001).

With such operation as was mentioned above, there can be obtained a constant distribution of luminance within the surface, irrespective of the position information of the turn-on region, and thereby a picture can be displayed, on which no black float can be recognized, visually.

Also, the methods for determining the numbers of regions of the region "I", the region "J" and the region "K", and the methods of taking the configuration of the regions are not determined or constant, but may be obtained by others than that shown in Figs. 9A to 9C. Thus, there is no necessity of including all the region "I", the region "J" and the region "K" therein, but the following combinations are possible: i.e., only the region "J" and the region "K", only the region "I" and the region "J", etc., for example.

<Embodiment 3>

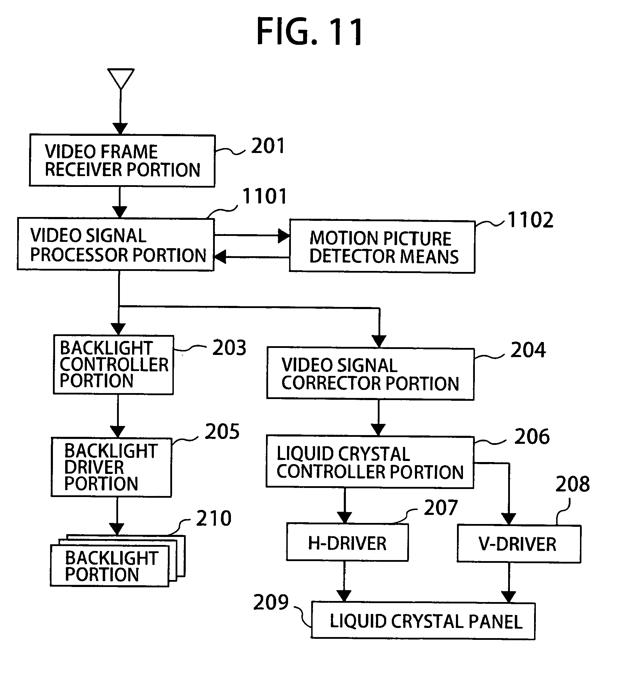

Fig. 11 is a block diagram for showing an entire circuit of the liquid crystal display apparatus, according to a third embodiment of the present invention.

The liquid crystal display apparatus, according to this embodiment, is constructed by adding a motion picture detector means (1102) to that of the embodiment 2. Thus, it has the a motion picture detector means, including a motion vector, representatively, and it transmits an output thereof to a video signal processor portion (1101), and that video signal processor portion changes a control method with using this output. However, as is shown in the same figure, the motion picture detector portion must be provided outside the video signal processor means, but may be included within the video signal processor portion.

When a motion picture is detected by the motion picture detector means, the operation of the control filter (302) differs from that of the embodiment 2. Thus, the control filter changes the region "I", the region "J" and the region "K" in Figs. 9A to 9C, depending on the direction of movement of the input video signal.

For example, when a picture or video is inputted, on which white characters move slowly directing from a lower end of the screen to an upper end thereof, such as, an end roll of a movie, for example, representatively, in a several pieces of the correction regions mentioned above are repeated the video signal, being calculated with the coefficient value determined to be equal to the black float or no difference of luminance be visually recognizable thereon, and the video signal, being calculated with the coefficient value determined to direct the luminance to "0" gradually, and thereby sometimes giving a feeling that something is wrong on the output picture or video. Then, by changing a manner of taking the region "I", the region "J" and the region "K" into that shown in Fig. 9B, when detecting that such the picture or video as was mentioned above is inputted by the motion picture detector means, the video can be always determined so that no equivalence to the black float nor no difference of luminance can be recognized, visually, thereon, and it is possible to display a picture or video having the constant luminance distribution within a surface irrespective of the position information of the turn-on region, i.e., no back float can be visually recognized thereon.

However, in the embodiments mentioned above, the explanation was made on the examples of using the LED as the light source, but other light source than that may be applied therein, such as, a laser diode, cold-cathode/hot-cathode fluorescence tubes (CCFL, EEFL, HCFL).

This invention can be applied to a liquid crystal display apparatus having the backlight divided into a plural number of regions, for enabling to control them individually, such as, a liquid crystal television or a portable display, for example.

The present invention may be embodied in other specific forms without departing from the spirit or essential feature or characteristics thereof. The present embodiment(s) is/are therefore to be considered in all respects as illustrative and not restrictive, the scope of the invention being indicated by the appended claims rather than by the forgoing description and range of equivalency of the claims are therefore to be embraces therein.

## Claims

1.  A video display apparatus, comprising:

    a display panel, and
    a backlight, which is divided into a plural number of regions, each for emitting lights to said display panel, wherein the luminance of the backlight can be controlled for each of said plural number of regions, further comprising:

    a histogram detector, which is configured to conduct a histogram detection for each display region corresponding to said backlight from an input video signal of one (1) frame;
    a leakage light amount detector, which is configured to calculate a leakage light amount, when a certain one of said regions is turned on, into a region other than that certain region;
    a controller, which is configured to determine a control value of said backlight, depending on said histogram detected and said leakage light amount; and
    a video signal corrector, which is configured to adjust an amount of a controlled light of said display panel, depending on the backlight control value, which is determined by said controller.

2.  The video display apparatus, as is described in the claim 1, further comprising:

    a determining portion, which is configured to determine on whether the input video is a specific video or not, depending on said histogram detected, wherein
    said leakage light amount detector calculates the leakage light amount into the other region than said certain region, when said specific video signal is inputted by said determining portion.

3.  The video display apparatus, as is described in the claim 2, wherein
    said determining portion determines that the input video signal is the specific video when 90% or greater than that of numbers of pixels within a region, a gradation value thereof being equal to or less than a predetermined upper limit gradation value (P1) and a gradation value thereof being equal to or less than a predetermined lower limit gradation value (P2), on said histogram detected, in all of the regions.

4.  The video display apparatus, as is described in the claim 2, wherein
    said predetermined upper limit gradation value (P1) is a value from 0% to 10% of a maximum gradation value of a pixel, and said predetermined lower limit gradation value (P2) is a value from 85% to 100% of the maximum gradation value thereof.

**5.** The video display apparatus, as is described in the claim 2, wherein said controller controls to put out a luminance of said backlight of a region, in which an amount of said leakage lights is equal to or greater than a predetermined value, and to turn on a luminance of said backlight of a region, in which an amount of said leakage lights is equal to or lower than a predetermined value, at the luminance lower than that of the lighten region, when said specific video signal is inputted therein.

**6.** The video display apparatus, as is described in the claim 1, wherein said controller controls to put out the luminance of said backlight of the region, in which an amount of said leakage lights is equal or greater than a predetermined value, or turn on at a luminance thereof equal to or less than 1/100 of the luminance when it is turned on, and to lower the luminance of said backlight of the region, in which an amount of said leakage lights is equal or less than a predetermined value, at a luminance equal to or less than 1/100 of a light source of the turned-on region.

**7.** The video display apparatus, as is described in the claim 5, wherein said predetermined value of said leakage light amount has a luminance equal to or greater than 1% of a maximum luminance in said turn-on region.

**8.** The video display apparatus, as is described in the claim 1, wherein said controller controls said backlight of the region (s), including a gradation value equal to or less than said lower limit gradation value (P2), to emit lights at a maximum luminance thereof, when said specific video signal is inputted therein.

**9.** The video display apparatus, as is described in the claim 1, wherein said video signal corrector corrects an amount of a controlled light of the display panel corresponding to the display region, being said other region, upon basis of position information of said turn-on region.

**10.** The video display apparatus, as is described in the claim 1, wherein said video signal corrector corrects an amount of a controlled light of the display panel corresponding to the display region, being said other region, to be constant of the luminance within a surface, when the turn-on region of said specific video is included within a specific region.

**11.** The video display apparatus, as is described in the claim 1, further comprising:

a motion picture detector, which is configured to detect a direction of movement of a motion picture, wherein said video signal corrector corrects an amount of a controlled light of said display panel corresponding to the display region, being said other region, to be constant of the luminance within a surface, depending on a moving direction of said specific picture, which is detected by said motion picture detector.

**12.** The video display apparatus, as is described in the claim 1, further comprising:

one or more of light sources corresponding to each of said regions, wherein said light source is made of a light emitting diode (LED).

# FIG. 1A

BLACK
PICTURE

WHITE
PICTURE

BLACK
PICTURE

INPUT VIDEO SIGNAL

# FIG. 1B

101

| 0 | 1 | 0 | 255 | 0 | 1 |
|---|---|---|-----|---|---|
| 0 | 1 | 0 | 255 | 0 | 1 |
| 0 | 1 | 0 | 255 | 0 | 1 |
| 0 | 1 | 0 | 255 | 0 | 1 |
| 0 | 1 | 0 | 255 | 0 | 1 |

102

X

BACKLIGHT CONTROL VALUES

# FIG.1C

BACKLIGHT LUMINANCE DISTRIBUTION

# FIG.1D

TARGET LUMINANCE DISTRIBUTION

# FIG.1E

TRANSMISSION FACTOR OF LIQUID CRYSTAL PANEL

# FIG. 2

VIDEO FRAME RECEIVER PORTION — 201

VIDEO SIGNAL PROCESSOR PORTION — 202

BACKLIGHT CONTROLLER PORTION — 203

VIDEO SIGNAL CORRECTOR PORTION — 204

BACKLIGHT DRIVER PORTION — 205

LIQUID CRYSTAL CONTROLLER PORTION — 206

BACKLIGHT PORTION — 210

H-DRIVER — 207

V-DRIVER — 208

209 — LIQUID CRYSTAL PANEL

# FIG. 3

202 VIDEO SIGNAL
PROCESSOR PORTION

HISTOGRAM DETECTOR
PORTION FOR EACH REGION — 301

INPUT VIDEO IS
CAUGHT BY
CONTROL FILTER? — 302

N

Y — 303

304

TURN CONTROL
SIGNAL 3 "ON"

TURN CONTROL
SIGNAL 3 "OFF"

— 305

— 306

DETERMINE BACKLIGHT
CONTROL VALUE BASED
ON CORRESPONDING
POSITION INFORMATION

DETERMINE BACKLIGHT
CONTROL VALUE BASED
ON INPUT VIDEO SIGNAL

PRODUCER PORTION PRODUCING
BACKLIGHT LUMINANCE DISTRIBUTION
FROM LIGHT DISTRIBUTION
CHARACTERISTICS OF BACKLIGHT

308

MEMORY REGION
PORTION

— 307

203

204

BACKLIGHT
CONTROLLER
PORTION

VIDEO SIGNAL
CORRECTOR
PORTION

# FIG. 4A

BLACK
PICTURE

WHITE
PICTURE

INTERMEDIATE
GRADATION
PICTURE

INPUT VIDEO SIGNAL

# FIG. 4B

|   | 1 | 2 | 3 | 4 | 5 | 6 |
|---|---|---|---|---|---|---|
| A |   |   |   |   |   |   |
| B |   |   |   |   |   |   |
| C |   |   |   |   |   |   |
| D |   |   |   |   |   |   |
| E |   |   |   |   |   |   |

BACKLIGHT POSITIONS

# FIG. 4C

REGION "A1"

CONTROL SIGNAL 1: ON
CONTROL SIGNAL 2: OFF

FREQUENCY

INPUT GRADATION

0  P1  P2  255

REGION "A4"

CONTROL SIGNAL 1: ON
CONTROL SIGNAL 2: ON

FREQUENCY

INPUT GRADATION

0  P1  P2  255

REGION "A6"

CONTROL SIGNAL 1: OFF
CONTROL SIGNAL 2: OFF

FREQUENCY

INPUT GRADATION

0  P1  P2  255

HISTOGRAMS IN VARIOUS REGIONS

16

# FIG. 5

204 VIDEO SIGNAL CORRECTOR PORTION

501 IS CONTROL SIGNAL 3 "ON"? — N

Y

502 IS CONTROL SIGNAL 2 OF CORRECTION REGION "OFF"? — N

Y

503 IS CORRECTION REGION WITHIN PREDETERMINED DISTANCE FROM TURN-ON REGION? — N

506 VIDEO SIGNAL CORRECTION UPON BASIS OF BACKLIGHT LUMINANCE DISTRIBUTION

Y

VIDEO SIGNAL DETERMINE PORTION 504

VIDEO SIGNAL CORRECTION UPON BASIS OF BACKLIGHT LUMINANCE DISTRIBUTION 505

COEFFICIENT CALCULATOR PORTION 507

MEMORY REGION PORTION 508

LIQUID CRYSTAL CONTROLLER PORTION 206

# FIG. 6A

# FIG. 6B

MAXIMUM LUMINANCE LINE

—— LIGHT DISTRIBUTION CHARACTERISTIC BY REGION "C3"

- - - - LIGHT DISTRIBUTION CHARACTERISTIC BY NEIGHBORING REGION

# FIG. 6C

MAXIMUM LUMINANCE LINE

—— LIGHT DISTRIBUTION CHARACTERISTIC BY REGION "C3"

- - - - LIGHT DISTRIBUTION CHARACTERISTIC BY NEIGHBORING REGION

# FIG. 7A

|   | 1 | 2 | 3 | 4 | 5 | 6 |
|---|---|---|---|---|---|---|
| A | 0 | 0 | 0 | 0 | 0 | 0 |
| B | 0 | 25 | 5 | 25 | 0 | 0 |
| C | 0 | 5 | 75 | 5 | 0 | 0 |
| D | 0 | 25 | 5 | 25 | 0 | 0 |
| E | 0 | 0 | 0 | 0 | 0 | 0 |

101
102

CONVENTIONAL ART

# FIG. 7B

|   | 1 | 2 | 3 | 4 | 5 | 6 |
|---|---|---|---|---|---|---|
| A | 0 | 0 | 0 | 0 | 0 | 0 |
| B | 0 | 0 | 0 | 0 | 0 | 0 |
| C | 0 | 0 | 75 | 0 | 0 | 0 |
| D | 0 | 0 | 0 | 0 | 0 | 0 |
| E | 0 | 0 | 0 | 0 | 0 | 0 |

101
102

PRESENT INVENTION

# FIG. 8

## Table 1

| | | | s | | |
|---|---|---|---|---|---|
| | | 0 | 1 | 2 | 3 |
| t | 0 | / | A1 | A2 | B3_0 |
| | 1 | A1 | A2 | B2_1 | C |
| | 2 | A2 | B1_2 | B2_2 | C |
| | 3 | B0_3 | C | C | C |

## Table 2

| | | $|s|+|t|$ | | |
|---|---|---|---|---|
| 0 | 1 | 2 | 3 | 4 |
| / | A1 | A2 | A3 | A4 |

A: VIDEO SIGNAL DETERMINED TO BE EQUAL TO BLACK FLOAT
   OR VISUALLY UN RECOGNIZABLE OF LUMINANCE DIFFERENCE
B: VIDEO SIGNAL DETERMINED TO DIRECT
   LUMINANCE TO "0", GRADUALLY
C: ALL BACK SCREEN SIGNAL

# FIG. 9A

101

REGION "I"

REGION "J"

REGION "K"

# FIG. 9B

101

REGION "I"

REGION "J"

REGION "K"

# FIG. 9C

101

REGION "I"

REGION "J"

REGION "K"

# FIG. 10

1005 VIDEO SIGNAL CORRECTOR PORTION

IS CONTROL SIGNAL 3 "ON"? — 501 — N

Y

IS CONTROL SIGNAL 2 OF CORRECTION REGION "OFF"? — 502 — N

Y

CORRECTION REGION IS REGION "k"? — 1001 — Y

N

506

VIDEO SIGNAL DETERMINE PORTION — 504

VIDEO SIGNAL CORRECTION UPON BASIS OF BACKLIGHT LUMINANCE DISTRIBUTION — 506

CORRECTION REGION IS REGION "i"? — 1002 — N

Y

VIDEO SIGNAL CORRECTION UPON BASIS OF BACKLIGHT LUMINANCE DISTRIBUTION — 505

VIDEO SIGNAL CORRECTION UPON BASIS OF BACKLIGHT LUMINANCE DISTRIBUTION — 505

COEFFICIENT CALCULATOR PORTION — 1003

MEMORY REGION PORTION — 1005

COEFFICIENT CALCULATOR PORTION — 1004

MEMORY REGION PORTION — 1006

LIQUID CRYSTAL CONTROLLER PORTION — 206

# FIG. 11

VIDEO FRAME
RECEIVER PORTION — 201

VIDEO SIGNAL
PROCESSOR PORTION — 1101

MOTION PICTURE
DETECTOR MEANS — 1102

BACKLIGHT
CONTROLLER
PORTION — 203

VIDEO SIGNAL
CORRECTOR PORTION — 204

BACKLIGHT
DRIVER
PORTION — 205

LIQUID CRYSTAL
CONTROLLER PORTION — 206

H-DRIVER — 207

V-DRIVER — 208

BACKLIGHT
PORTION — 210

209 — LIQUID CRYSTAL PANEL

# FIG. 12A

VIDEO TO DISPLAY ON LCD

| BLACK<br>PICTURE | WHITE<br>PICTURE | BLACK<br>PICTURE |
| :---: | :---: | :---: |
| ↓ | ↓ | ↓ |

# FIG. 12B

BACKLIGHT UNIT

WHITE PICTURE PORTION

| B | C | A | C | B |
| :---: | :---: | :---: | :---: | :---: |
| ↓ | ↓ | ↓↓ | ↓ | ↓ |

# FIG. 12C

VIDEO ON LCD

| B | C | Ab | Ab | C | B |
| :---: | :---: | :---: | :---: | :---: | :---: |
| ↓ | ↓ | ↓ | ↓ | ↓ | ↓ |

↑           ↑  ↑   ↑  ↑        ↑

LUMINANCE DIFFERENCE IS REDUCED, AND UNNATURAL
BLACK FLOAT IS DISSOLVED.

**EP 2 214 154 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008051905 A